# EUROPÄISCHE PATENTANMELDUNG

(11) **EP 2 374 598 A1**
(43) Veröffentlichungstag der Anmeldung: **12.10.2011**
(21) Anmeldenummer: 11002124.3
(22) Anmeldetag: 15.03.2011
(51) Int. Cl.: B29C 45/54

(54) **Plastifizier- und Einspritzeinheit einer Spritzgiessmaschine und Verfahren zum Spritzgiessen**

(30) Priorität: 09.04.2010 DE 102010014451
(71) Anmelder: Wittmann Battenfeld GmbH, 2542 Kottingbrunn (AT)
(72) Erfinder: Ganz, Martin, 2380 Perchtoldsdorf (AT)
(74) Vertreter: Gosdin, Michael

(57) **Zusammenfassung**

Die Erfindung betrifft eine Plastifizier- und Einspritzeinheit (1) einer Spritzgießmaschine. Um insbesondere kleinste Mengen an Kunststoffschmelze zum Spritzgießen kleiner und kleinster Formteile in prozesstechnisch optimaler Weise in ein Spritzgießwerkzeug einspritzen zu können, umfasst die Einheit einen Schneckenzylinder (2), in dem eine Plastifizierschnecke (3) drehbar und axial verschieblich angeordnet ist, und ein Einspritzelement (4), das ein Kolben-Zylinder-System (5, 6) umfasst, wobei durch eine axiale Bewegung eines Kolbens (5) in einem Zylinder (6) eine dosierte, in einem Abschnitt (7) des Zylinders (6) hinterlegte Menge an Kunststoffschmelze über eine Einspritzdüse (8) in ein Spritzgießwerkzeug ausgetrieben werden kann, wobei ein Fließweg (9) zwischen dem Ende des Schneckenzylinders (2) und dem Abschnitt (7) des Zylinders (6) angeordnet ist und wobei der Fließweg (9) frei von Ventilelementen ist. Des weiteren betrifft die Erfindung ein Verfahren zum Spritzgießen eines Formteils.

## Beschreibung

Die Erfindung betrifft eine Plastifizier- und Einspritzeinheit einer Spritzgießmaschine, die einen Schneckenzylinder umfasst, in dem eine Plastifizierschnecke drehbar und axial verschieblich angeordnet ist.

Plastifizier- und Einspritzeinheiten dieser Art sind im Stand der Technik hinlänglich bekannt. Durch Rotation der Schnecke im Schneckenzylinder wird Kunststoffschmelze erzeugt und in einem Raum vor der Schnecke (Schneckenvorraum) gespeichert. Ist hinreichend Schmelze plastifiziert, wird diese durch eine axiale Schubbewegung der Schnecke über eine Einspritzdüse ins Spritzgießwerkzeug eingespritzt.

Gattungsgemäße Lösungen zeigen die DD6262 A1, die US2004/0026809 A1 und die EP1 095 753A1.

Werden lediglich kleine und kleinste Mengen an Schmelze benötigt, um die Kavität des Spritzgießwerkzeugs zu füllen, sollen also sehr kleine Formteile gespritzt werden (sog. Mikrospritzgießen), ist diese Methode nicht tauglich. Bekannt ist es, die Schmelze durch die Rotation der Schnecke direkt in ein Einspritzelement zu fördern. Ist das Kolben-Zylinder-artig ausgebildete Einspritzelement hinreichend mit Schmelze gefüllt, wird durch axiale Verschiebung eines Kolbens die Schmelze in das Spritzgießwerkzeug ausgetrieben. Hier erfolgt also eine Trennung der Plastifizierung, des Aufdosierens und des Einspritzens der Schmelze.

Auch diese Methode ist nicht mehr tauglich, wenn die Menge an Schmelze, die für das Füllen des Spritzgießwerkzeugs benötigt wird, nur minimal wird.

Der Erfindung liegt daher die **Aufgabe** zugrunde, eine Plastifizier- und Einspritzeinheit einer Spritzgießmaschine sowie ein Verfahren für deren Betrieb vorzuschlagen, mit der bzw. mit dem es möglich ist, auch kleinste Schmelzemengen zu plastifizieren und in ein Spritzgießwerkzeug einzuspritzen. Dabei soll auch Wert auf eine gute Reinigungsmöglichkeit des Systems und eine schonende Verarbeitung bzw. auf ein schonendes Einspritzen des Materials gelegt werden, so dass die Qualität der Formteile hoch ist.

Die **Lösung** dieser Aufgabe durch die Erfindung ist dadurch gekennzeichnet, dass die Plastifizier- und Einspritzeinheit der Spritzgießmaschine einen Schneckenzylinder umfasst, in dem eine Plastifizierschnecke drehbar und axial verschieblich angeordnet ist, und ein Einspritzelement, das ein Kolben-Zylinder-System umfasst, wobei durch eine axiale Bewegung eines Kolbens in einem Zylinder eine dosierte, in einem Abschnitt des Zylinders hinterlegte Menge an Kunststoffschmelze über eine Einspritzdüse in ein Spritzgießwerkzeug ausgetrieben werden kann, wobei ein Fließweg zwischen dem Ende des Schneckenzylinders und dem Abschnitt des Zylinders angeordnet ist und wobei der Fließweg frei von Ventilelementen ist.

Der Fließweg besteht bevorzugt aus eine Bohrung ohne weitere Elemente, die die Strömung der Schmelze beeinflussen würden.

Die Einspritzdüse ist bevorzugt einteilig mit dem Zylinder ausgebildet. Sie kann eine Bohrung für den Kolben aufweisen, die bis zum dem Spritzgießwerkzeug zugewandten axialen Ende der Einspritzdüse einen konstanten Durchmesser aufweist. Dies hat den wesentlichen Vorteil, dass durch Ausschieben des Kolbens bis zum Ende der Einspritzdüse praktisch alles in dem Abschnitt hinterlegte Schmelzematerial aus der Einspritzdüse ausgebracht werden kann. Es bleibt also kein Schmelzerest in der Düse.

Der Kolben kann dabei in einer ersten Position gehalten werden, in der eine fluidische Verbindung zwischen dem Fließweg und dem Abschnitt des Zylinders besteht, wobei der Kolben weiterhin in einer zweiten Position gehalten werden kann, in der eine fluidische Verbindung zwischen dem Fließweg und dem Abschnitt des Zylinders unterbunden wird.

Die Längsachse des Schneckenzylinders und die Zylinderachse des Einspritzelements sind bevorzugt zueinander unter einem Winkel zwischen 30° und 80°, vorzugsweise zwischen 45° und 65°, angeordnet.

Im Bereich des Fließwegs kann ein Drucksensor angeordnet sein. Mit diesem kann in sehr präziser Weise der Staudruck ermittelt werden.

Der Kolben kann an seinem vom Zylinder entfernten Ende mit einem axialen Bewegungselement verbunden sein, wobei das Bewegungselement einen Linearantrieb umfasst, insbesondere mindestens einen von einem Servomotor angetriebenen umlaufenden Riemen, von dem eine Umfangsstelle mit dem Kolben direkt oder indirekt verbunden ist. Möglich ist es auch, dass der Kolben an seinem vom Zylinder entfernten Ende mit einem axialen Bewegungselement verbunden ist, das eine Pleuelstange umfasst, die mit ihrem einen Ende mit dem Kolben und mit ihrem anderen Ende mit einem Kurbelarm verbunden ist, der von einem Servomotor gedreht werden kann. Damit kann eine sehr dynamische und genaue Kolbenbewegung erzeugt werden, wodurch der Einspritzvorgang dynamisch und präzise gesteuert bzw. geregelt werden kann.

Der Schneckenzylinder und die Einspritzdüse sind bevorzugt von Heizelementen umgeben.

Zwecks Verzicht auf spezielle Elemente zur Verhinderung der Rückströmung von Schmelze ist bevorzugt vorgesehen, dass die Plastifizierschnecke als Mehrzonenschnecke ausgebildet ist, insbesondere als Drei-, Vier- oder Fünfzonen-Schnecke.

Das Verfahren zum Spritzgießen eines Formteils mit der genannten Vorrichtung zeichnet sich durch folgende Schritte aus:
a) Verfahren des Kolbens in eine Position, in der die fluidische Verbindung zwischen dem Fließweg und dem Abschnitt des Zylinders, in dem einzuspritzende Kunststoffschmelze hinterlegt werden kann, unterbunden ist;
b) Plastifizieren von Kunststoffschmelze durch Drehantrieb der Plastifizierschnecke und Aufdosieren der Kunststoffschmelze in einem Raum zwischen dem Ende der Plastifizierschnecke und dem Fließweg sowie im Fließweg;
c) Verschieben des Kolbens in eine Position, in der die fluidische Verbindung zwischen dem Fließweg und dem Abschnitt des Zylinders, in dem einzuspritzende Kunststoffschmelze hinterlegt werden kann, freigegeben ist;
d) axiales Verfahren der Plastifizierschnecke zum Austreiben von Kunststoffschmelze vom Raum zwischen dem Ende der Plastifizierschnecke und dem Fließweg sowie vom Fließweg in den Abschnitt des Zylinders und Hinterlegen einer definierten Menge an Kunststoffschmelze in dem Abschnitt;
e) axiales Verschieben des Kolbens zum Einspritzen der im Abschnitt hinterlegten Menge an Kunststoffschmelze über die Einspritzdüse.

Das Aufdosieren von Kunststoffschmelze gemäß obigem Schritt b) kann dabei so erfolgen, dass ein vorgegebener Staudruck im Raum zwischen dem Ende der Plastifizierschnecke und dem Fließweg aufrechterhalten wird.

Das Einspritzen der Kunststoffschmelze gemäß obigem Schritt e) kann so erfolgen, dass ein vorgegebener Einspritzdruck in der Einspritzdüse aufrechterhalten wird.

Die Erfindung stellt also darauf ab, dass in einer ersten Stufe mittels der Schnecke das Plastifizieren von Kunststoffmaterial, das Dosieren desselben und die Übergabe der Schmelze erfolgt, während in einer zweiten Stufe mittels des Kolbens das Einspritzen durchgerührt wird.

Die folgenden Vorteile können insbesondere beim Präzisions- und Mikrospritzgießen mit dem vorgeschlagenen System bzw. mit dem genannten Verfahren genutzt werden:

Es erfolgt ein Einspritzen von thermisch homogenem Material. Ein kalter Materialpfropfen wird vermieden, weil zwischen dem kalten Werkzeug und dem heißen Aggregat kein Restmaterial verbleibt. Das Massepolster ist minimal, was günstig ist, wenn nur sehr kleine Schmelzemengen pro Schuss benötigt werden. Der Fließweg der Schmelze ist sehr kurz. Beim Einspritzen gibt es nur geringe Druckverluste.

Es sind alle Standardgranulate problemlos verarbeitbar. Die Plastifizierung erfolgt bei relativ geringer Belastung des Materials. Die Dosierung der Schmelze kann bei relativ geringen Drücken erfolgen, was auf das Material schonend wirkt. Es ist keine unnötige Umlenkung der Schmelze nötig, was sich ebenfalls vorteilhaft auf das Schmelzematerial auswirkt. Von Vorteil ist auch das First-in-First-Out-Prinzip für die Schmelzehandhabung. Die Vordosierung kann mit geringen Leistungen erfolgen, was auch unter Gesichtspunkten der Energieeinsparung relevant ist. Der Einspritzdruck wird erst sehr nahe am Spritzgießwerkzeug aufgebaut. Das Messen des Einspritzdrucks kann sehr einfach erfolgen, indem die Kraft gemessen wird, die beim Einspritzen auf den Einspritzkolben wirkt. Das Fördern des plastifizierten Schmelzematerials vom Schneckenvorraum in den Einspritzzylinder kann durch einen kleinen Hub der Plastifizierschnecke von z. B. 2 cm erfolgen. Der Rückhub der Schnecke erfolgt beim Aufdosieren des Materials für den nächsten Schuss.

Durch die Nutzung des Einspritzkolbens als Verschluss des Fließwegs kann auf Rückstromsperren verzichtet werden, was beim Mikrospritzgießen problematisch wäre.

Es sind Schussgewichte möglich, die bis unter 50 mg liegen können. Das Einspritzen lässt sich hochdynamisch ohne Überschwingen vornehmen. Die Prozesssicherheit sowie die Wiederholgenauigkeit sind hoch.

Materialleckagen können - mangels entsprechender Ventile oder sonstiger Steuerelemente im Fließweg - leichter vermieden werden. Die Staudruckmessung kann durch den vorgeschlagenen Sensor direkt und damit genau erfolgen. Damit kann eine genaue Staudruckregelung erfolgen, was die Dosiergenauigkeit entsprechend erhöht. Für elektrische Maschinen ist dies sehr vorteilhaft, da im Sensorbereich kein Einspritzdruck wirkt, d. h. der Einspritzdruck beeinflusst den Staudruck nicht. Der Sensor muss daher auch lediglich dem maximalen Staudruck standhalten.

Eine Drei-, Vier- oder Fünf-Zonen-Plastifizierschnecke verhindert den Materialrückfluss, so dass insofern auf weitere Maßnahmen (Rückstromsperre) zum Verhindern des Rückfließens von Schmelze verzichtet werden kann. Es ist aber auch denkbar, dass eine Rückstromsperre im Bereich der Schnecke angeordnet wird.

Das System ist einfach aufgebaut und somit kostengünstig realisierbar. Auch die Montage ist relativ problemlos und somit kostengünstig. Die Reinigung des Systems ist - mangels Ventile und sonstiger Steuerelemente - in einfacher Weise möglich.

Vorteilhaft ist auch eine einfache Umbaumöglichkeit bestehender System auf die erfindungsgemäße Ausgestaltung.

In der Zeichnung ist ein Ausführungsbeispiel der Erfindung dargestellt. Es zeigen:
- Fig. 1: eine geschnittene Vorderansicht einer Plastifizier- und Einspritzeinheit einer Spritzgießmaschine zum Mikrospritzgießen,
- Fig. 2: in vergrößerter Darstellung einen Ausschnitt aus Fig. 1, nämlich den Übergang von einem Fließweg in ein Kolben-Zylinder-System des Einspritzelements, wobei der Fließweg in fluidischer Verbindung mit dem Zylinderraum steht,
- Fig. 3: dieselbe Darstellung wie in Fig. 2, wobei die fluidische Verbindung zwischen dem Fließweg und dem Zylinderraum unterbrochen ist, und
- Fig. 4: einen vergrößerten Ausschnitt aus Fig. 1 mit Darstellung der Einspritzdüse.

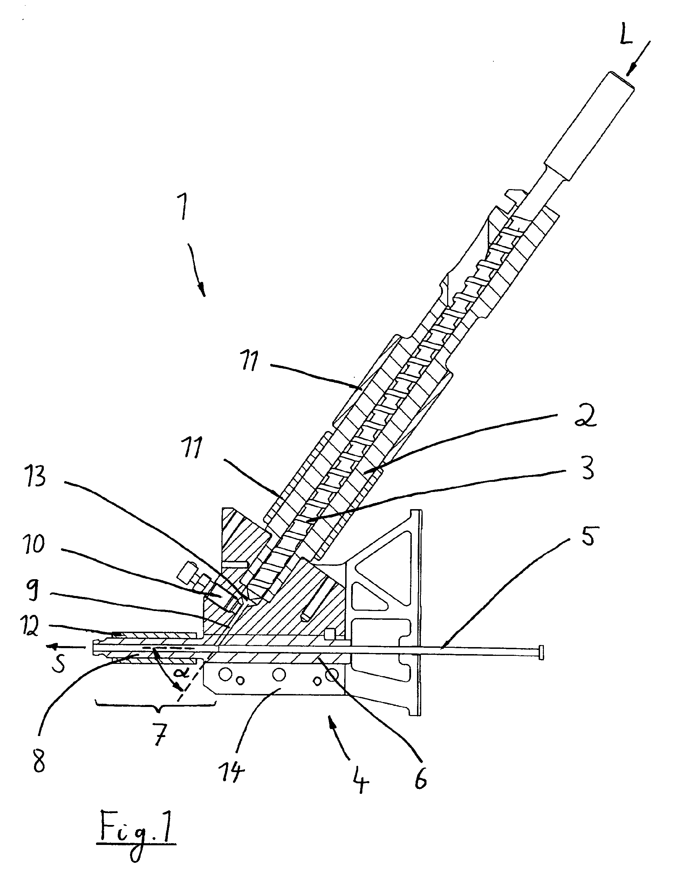

In Fig. 1 ist eine Plastifizier- und Einspritzeinheit 1 dargestellt, die zum Spritzgießen kleiner und kleinster Formteile ausgebildet ist, d. h. zum Mikrospritzgießen. Die Plastifizier- und Einspritzeinheit 1 umfasst in ihrem oberen Bereich einen Schneckenzylinder 2, in dem eine Plastifizierschnecke 3 sowohl drehbar als auch axial verschieblich angeordnet ist. Da die Mittel zum Drehantrieb und zum axialen Verschieben hinlänglich im Stand der Technik bekannt sind, sind diese nicht dargestellt. Die Plastifizierschnecke 3 bewegt sich beim axialen Verschieben in Richtung der Längsachse L des Schneckenzylinders 2.

Weiterhin umfasst die Plastifizier- und Einspritzeinheit 1 ein Einspritzelement 4, das ein Kolben-Zylinder-System aufweist. Hierbei ist in einem Zylinder 6 ein Kolben 5 angeordnet, der in Richtung der Zylinderachse S verschiebbar ist.

Zwischen der Längsachse L des Schneckenzylinders 2 und der Zylinderachse S des Zylinders 6 liegt ein Winkel α vor, der vorliegend bei ca. 55° liegt.

Die fludische Verbindung zwischen einem Raum 13 vor der Plastifizierschnecke 3 (Schneckenvorraum) und dem Innenraum des Zylinders 6 wird durch einen Fließweg 9 hergestellt, der als ungestörte Bohrung ausgebildet ist. Vom Raum 13 kann demgemäß plastifizierte Kunststoffschmelze über den Fließweg 9 in den Abschnitt 7 der Zylinderbohrung gelangen, die als Einspritzdüse 8 ausgeführt ist. Um ein Einfrieren plastifizierten Kunststoffmaterials zu verhindern, sind sowohl der Schneckenzylinder 2 als auch die Einspritzdüse 8 von Heizelementen 11, 12 umgeben. Auch der Verteilerblock 14 der Einheit kann mit nicht näher dargestellten Heizelementen temperiert werden.

An den Fließweg 9 grenzt ein Drucksensor 10 an, der den Staudruck im Fließweg 9 genau erfassen kann.

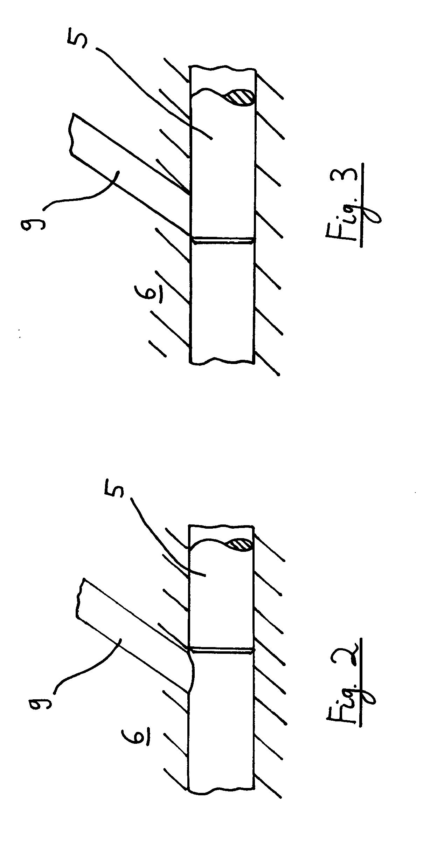

Wesentlich ist, dass der Fließweg 9 als Bohrung ausgebildet ist, die frei von Steuerelementen (Ventilen) ist, mit denen der Fluss der Kunststoffschmelze beeinflusst werden kann. Statt dessen ist der Übergang des Fließwegs 9 zur Bohrung des Zylinders 6 in spezieller Weise ausgebildet, wie es aus den Figuren 2 und 3 ersichtlich ist.

Hiernach kann der Kolben 5 einmal (s. Fig. 2) in einer Position platziert werden, in der eine fluidische Verbindung zwischen Fließweg 9 und Bohrung des Zylinders 6 besteht. In dieser Position kann plastifizierter Kunststoff durch Ausführen einer axialen Verschiebebewegung der Plastifizierschnecke 3 über den Fließweg 9 in die Bohrung im Zylinder 6, d. h. in die Einspritzdüse 8, gelangen.

Ist indes der Kolben 5 etwas weiter vorgeschoben, wie es Fig. 3 darstellt, wird diese fluidische Verbindung unterbrochen. Das gilt auch für den Fall, wenn der Kolben 5 - nach Hinterlegung einer gewünschten Menge an Kunststoffschmelze in der Bohrung des Zylinders 6 - axial (in Fig. 3 nach links) verschoben wird, um diese Schmelzemenge ins Spritzgießwerkzeug einzuspritzen.

Während des Verschlusses der Verbindung zwischen Fließweg 9 und Bohrung im Zylinder 6 kann das Kunststoffmaterial für den nächsten Schuss aufdosiert und im Raum 13 gespeichert werden; während dieses Prozesses wird die Plastifizierschnecke 3 wieder in ihre Ausgangslage axial zurückgezogen.

Während des Einspritzens von Schmelze mittels des Kolbens 5 kann zeitlich parallel mittels der Plastifizierschnecke 3 das Aufdosieren des Materials für den nächsten Schuss erfolgen.

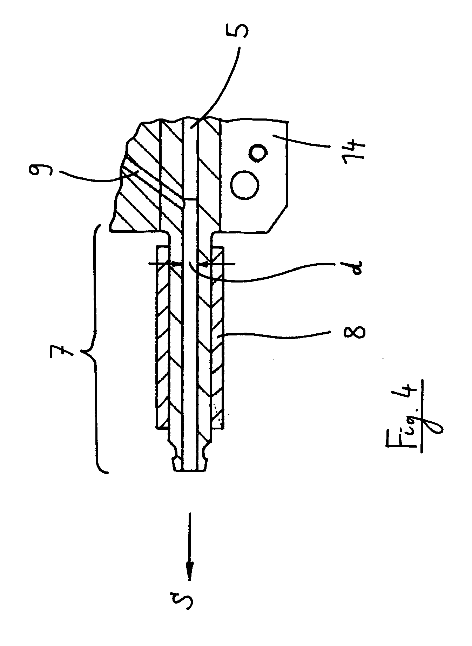

In Fig. 4 ist noch einmal eine vergrößerte Darstellung des Bereichs der Vorrichtung gemäß Fig. 1 zu sehen, der die Einspritzdüse 8 umfasst. Hier kann noch einmal im Detail gesehen werden, dass sich die Bohrung in der Einspritzdüse 8 mit dem Durchmesser d bis zum Ende der Einspritzdüse 8 erstreckt. Demgemäß kann der Kolben 5 (in Fig. 4 nach links) bündig bis zum axialen Ende der Einspritzdüse 8 geschoben werden. Hierdurch wird praktisch restlos alle Kunststoffschmelze aus der Einheit 1 ausgebracht, so dass - was gerade beim Mikrospritzgießen wichtig ist - kein Schmelze-Restmaterial in der Einspritzdüse 8 verbleibt. Damit wird die Einspritzdüse automatisch sauber und voll funktionsfähig gehalten.

### Bezugszeichenliste:

- 1: Plastifizier- und Einspritzeinheit
- 2: Schneckenzylinder
- 3: Plastifizierschnecke
- 4: Einspritzelement
- 5, 6: Kolben-Zylinder-System
- 5: Kolben
- 6: Zylinder
- 7: Abschnitt
- 8: Einspritzdüse
- 9: Fließweg
- 10: Drucksensor
- 11: Heizelement
- 12: Heizelement
- 13: Raum
- 14: Verteilerblock

- L: Längsachse
- S: Zylinderachse
- α: Winkel
- d: Durchmesser

## Patentansprüche

1. Plastifizier- und Einspritzeinheit (1) einer Spritzgießmaschine, die umfasst:
- einen Schneckenzylinder (2), in dem eine Plastifizierschnecke (3) drehbar und axial verschieblich angeordnet ist, und
- ein Einspritzelement (4), das ein Kolben-Zylinder-System (5, 6) umfasst, wobei durch eine axiale Bewegung eines Kolbens (5) in einem Zylinder (6) eine dosierte, in einem Abschnitt (7) des Zylinders (6) hinterlegte Menge an Kunststoffschmelze über eine Einspritzdüse (8) in ein Spritzgießwerkzeug ausgetrieben werden kann,
wobei ein Fließweg (9) zwischen dem Ende des Schneckenzylinders (2) und dem Abschnitt (7) des Zylinders (6) angeordnet ist und
wobei der Fließweg (9) frei von Ventilelementen ist.

2. Plastifizier- und Einspritzeinheit nach Anspruch 1, **dadurch gekennzeichnet, dass** die Einspritzdüse (8) einteilig mit dem Zylinder (6) ausgebildet ist.

3. Plastifizier- und Einspritzeinheit nach Anspruch 1 oder 2, **dadurch gekennzeichnet, dass** die Einspritzdüse (8) eine Bohrung für den Kolben (5) aufweist, die bis zum dem Spritzgießwerkzeug zugewandten axialen Ende der Einspritzdüse (8) einen konstanten Durchmesser (d) aufweist.

4. Plastifizier- und Einspritzeinheit nach einem der Ansprüche 1 bis 3, **dadurch gekennzeichnet, dass** der Kolben (5) in einer ersten Position gehalten werden kann, in der eine fluidische Verbindung zwischen dem Fließweg (9) und dem Abschnitt (7) des Zylinders (6) besteht, und dass der Kolben (5) in einer zweiten Position gehalten werden kann, in der eine fluidische Verbindung zwischen dem Fließweg (9) und dem Abschnitt (7) des Zylinders (6) unterbunden wird.

5. Plastifizier- und Einspritzeinheit nach einem der Ansprüche 1 bis 4, **dadurch gekennzeichnet, dass** die Längsachse (L) des Schneckenzylinders (2) und die Zylinderachse (S) des Einspritzelements (4) zueinander unter einem Winkel (α) zwischen 30° und 80°, vorzugsweise zwischen 45° und 65°, angeordnet sind.

6. Plastifizier- und Einspritzeinheit nach einem der Ansprüche 1 bis 5, **dadurch gekennzeichnet, dass** im Bereich des Fließwegs (9) ein Drucksensor (10) angeordnet ist.

7. Plastifizier- und Einspritzeinheit nach einem der Ansprüche 1 bis 6, **dadurch gekennzeichnet, dass** der Kolben (5) an seinem vom Zylinder (6) entfernten Ende mit einem axialen Bewegungselement verbunden ist, wobei das Bewegungselement einen Linearantrieb umfasst, insbesondere mindestens einen von einem Servomotor angetriebenen umlaufenden Riemen, von dem eine Umfangsstelle mit dem Kolben (5) direkt oder indirekt verbunden ist.

8. Plastifizier- und Einspritzeinheit nach einem der Ansprüche 1 bis 7, **dadurch gekennzeichnet, dass** der Schneckenzylinder (2) und die Einspritzdüse (8) von Heizelementen (11, 12) umgeben sind.

9. Plastifizier- und Einspritzeinheit nach einem der Ansprüche 1 bis 8, **dadurch gekennzeichnet, dass** die Plastifizierschnecke (3) als Mehrzonenschnecke ausgebildet ist, insbesondere als Drei-, Vier- oder Fünfzonen-Schnecke.

10. Verfahren zum Spritzgießen eines Formteils mit einer Vorrichtung nach einem der Ansprüche 1 bis 9,
**dadurch gekennzeichnet, dass**
es die Schritte aufweist:
a) Verfahren des Kolbens (5) in eine Position, in der die fluidische Verbindung zwischen dem Fließweg (9) und dem Abschnitt (7) des Zylinders (6), in dem einzuspritzende Kunststoffschmelze hinterlegt werden kann, unterbunden ist;
b) Plastifizieren von Kunststoffschmelze durch Drehantrieb der Plastifizierschnecke (3) und Aufdosieren der Kunststoffschmelze in einem Raum (13) zwischen dem Ende der Plastifizierschnecke (3) und dem Fließweg (9) sowie im Fließweg (9);
c) Verschieben des Kolbens (5) in eine Position, in der die fluidische Verbindung zwischen dem Fließweg (9) und dem Abschnitt (7) des Zylinders (6), in dem einzuspritzende Kunststoffschmelze hinterlegt werden kann, freigegeben ist;
d) axiales Verfahren der Plastifizierschnecke (3) zum Austreiben von Kunststoffschmelze vom Raum (13) zwischen dem Ende der Plastifizierschnecke (3) und dem Fließweg (9) sowie vom Fließweg (9) in den Abschnitt (7) des Zylinders (6) und Hinterlegen einer definierten Menge an Kunststoffschmelze in dem Abschnitt (7);
e) axiales Verschieben des Kolbens (5) zum Einspritzen der im Abschnitt (7) hinterlegten Menge an Kunststoffschmelze über die Einspritzdüse (8).

11. Verfahren nach Anspruch 10, **dadurch gekennzeichnet, dass** das Aufdosieren von Kunststoffschmelze gemäß Schritt b) von Anspruch 10 so erfolgt, dass ein vorgegebener Staudruck im Raum (13) zwischen dem Ende der Plastifizierschnecke (3) und dem Fließweg (9) aufrechterhalten wird.

12. Verfahren nach Anspruch 10 oder 11, **dadurch gekennzeichnet, dass** das Einspritzen der Kunststoffschmelze gemäß Schritt e) von Anspruch 10 so erfolgt, dass ein vorgegebener Einspritzdruck in der Einspritzdüse (8) aufrechterhalten wird.
